# EUROPEAN PATENT SPECIFICATION

(11) **EP 2 125 517 B1**
(45) Date of publication and mention of the grant of the patent: **12.08.2015**
(21) Application number: 08799660.9
(22) Date of filing: 11.03.2008
(51) Int. Cl.: B64D 43/00, G01M 9/06

(54) **SYSTEM FOR MEASURING PARAMETERS AT AIRCRAFT LOCI**
SYSTEM ZUM MESSEN VON PARAMETERN AN STELLEN AN EINEM FLUGZEUG
SYSTÈME POUR MESURER DES PARAMÈTRES AU NIVEAU D'UN LOCI D'AÉRONEF

(30) Priority: 14.03.2007 US 686057
(43) Date of publication of application: 02.12.2009
(73) Proprietor: The Boeing Company, Chicago, IL 60606-2016 (US); Holland, Mark J., Port Orchard, Washington 98367 (US)
(72) Inventor: MCNERNEY, Mark A., Sammamish, Washington 98074 (US); YEELES, Christopher J., Renton, California 98059 (US); MCGHEHEY, Mark J., Snohomish, Washington 98290 (US)
(74) Representative: Witte, Weller & Partner Patentanwälte mbB
(86) International application number: PCT/US2008/056534
(87) International publication number: WO 2008/118633

(56) References cited:
- US-A- 5 082 207
- US-A- 5 354 015
- US-A- 5 875 998
- US-A- 6 134 485
- US-B1- 6 253 126

## Description

### BACKGROUND

Embodiments of the disclosure may be directed to aircraft testing systems, and especially to in-flight aircraft testing systems measuring conditions outside the pressurized space of an aircraft.

Large numbers of measurements in harsh environments are commonly required in conducting flight test operations. Equipping for such flight tests may incur high installation costs. Adaptability, responsiveness to emergent requirements, limited space availability, and labor resources may drive the design of flight test instrumentation. The flight test validation of a new airplane model may be the last major step prior to certification of the new airplane model for revenue flight. It is important for processes and tools to be accurate, thorough, complete, efficient, and cost effective during flight test operations in order to meet delivery schedules.

During an aircraft flight test program, instrumentation personnel may monitor and record thousands of test points throughout the test airplane. Aircraft flight test programs are not necessarily limited to airplane testing. Flight test program measurements may include reading of production sensors as well as reading of sensors installed specifically for the flight test program. The flight test sensors installed specifically for the flight test program and any flight-test modification to the airplane itself that may be made specifically for the flight test program are preferably removed after testing. The test airplane is preferably reworked to a configuration suitable to being returned or delivered to the aircraft owner. Data from test measurements are preferably recorded during flight test conditions that are designed to demonstrate the safety and air worthiness of the airplane.

Measurement requirements may be defined in a computerized database that may reside on a database server called the Flight Test Computing System (FTCS). The FTCS may define what is to be measured, the sample rate, the accuracy required, and other parameters needed to acquire useful test data. From this FTCS requirements database, instrumentation personnel may design each measurement installation to provide the desired data. In order to guarantee successful data acquisition and reliability, an instrumentation engineer preferably considers many factors including, by way of example and not by way of limitation, the data system capabilities, end-to-end measurement uncertainty, signal latency through various components of the system, and conditions under which measurements will be made.

As the complexity of measurement installations increases, the cost and impact may rise in terms of design, installation and removal, schedule and other aspects. Unique costs may be associated with items such as, but not limited to, the use of specially coated wire to reduce flammability, finite wire separation requirements, requirements for skilled labor to effect installation of test instrumentation, weight limitations, and penetration through pressure seal fittings. In addition, wires routed into the pressurized vessel or aircraft cabin from outside of the pressurized vessel of aircraft cabin must be electrically isolated to prevent the possibility of lightning flowing through a flight test wire into the interior of the airplane during flight or on the ground.

In a typical flight test program one may be required to install five to seven miles of wire or similar connecting medium to gather and record sensor data from 2500 to 4000 sensing loci in a test aircraft. Sensing may be effected, by way of example and not by way of limitation, using analog transducers. Sensors may be located inside and outside the pressurized space or pressure vessel of the test aircraft, or may be installed in remote locations of the test aircraft such as, but not limited to, a wing, horizontal stabilizer or vertical stabilizer of the aircraft. Such outside, remote or otherwise difficult-to-access loci or locations may necessitate expensive penetrations and refurbishments of structure to install temporary test wiring.

Secondary costs of wire routing may also be significant. Not only is there the cost of installation and removal and restoration of any affected area of the test airplane, but there is also the cost associated with schedule disruption caused by the added steps a flight-test airplane must undergo for installation of wire and equipment during its production process. Benefits of embodiments of the disclosure may be pronounced when involving large testing programs. However, benefits of embodiments of the disclosure may also be realized even when involved in smaller testing instrumentations such as, by way of example and not by way of limitation, in smaller scale testing programs carried out between regularly scheduled operational flights by an aircraft.

Document US 6 134 485 A shows a system and method for analyzing physical parameters of flight data at a plurality of discrete locations about a surface of an aircraft including multisensor system having an array of belts. Each belt includes a plurality of interconnected belt segments including a substrate having an electrically conductive digital data bus, and at lest one module having a first sensor, a second sensor and a digital signal processor, anc a coating for protecting the belt segment. The first and second sensors, which are preferably formed as microelectromechanical sensors sharing a common substrate, respectively generate signals representative of a first physical parameter and a second physical parameter. The processor receives and analyzes the first and second signals to generate a third signal. The third signal is transmitted along the electrically-conductive bus to a remotely-located controller. The controller analyzes the third signal to obtain flight status information relating to the effect of the physical parameters on the flight.

Document US 6 253 126 B1 shows a method and an apparatus for three-dimensional flight control based generally upon measuring and comparting actual air pressures at or neaer various surfaces of an aircraft during flight. Sensors are provded for measuring air pressure acting on an aircraft surface. The methods and apparatus include those for measuring air pressure differentials between two or more sensors to evaluate certain critical flight parameters, such as the actual ift being produced, the air direction and speed relative to the aircraft, the air density, and the aircraft position and trajectory. The actual and comparative data provide information about the present flight conditions and performance of the aircraft, such as whether there is ice formed or forming on the wings, the direction and approach of wind shear, whether a stall is approaching, etc. The information can be evaluated by a computer, the aircraft's automatic flight control system ("AFCS"), or flight crew so that appropriate flight control measures can be taken.

There is a need for a system and method for measuring parameters at a plurality of loci associated with an aircraft that permits low-cost installation of test instrumentation and substantially quick removal of test instrumentation and return of the test aircraft to service condition.

### SUMMARY

A system for measuring parameters at a plurality of loci associated with an aircraft includes: (a) a central unit; (b) a plurality of communicating nodes coupled with the central unit; and (c) a respective plurality of sensing units associated with each respective communicating node of the plurality of communicating nodes; at least one selected sensing unit of at least one respective plurality of sensing units being a remote sensing unit. The at least one remote sensing unit communicates wirelessly with the respective communicating node.

It is, therefore, a feature of embodiments of the disclosure to provide a system for measuring parameters at a plurality of loci associated with an aircraft that permits low-cost installation of test instrumentation and low cost, and substantially quick removal of test instrumentation and return of the test aircraft to service.

While the present description deals with flight testing, one skilled in the art of testing and test instrumentation may recognize that embodiments of the disclosure can be advantageously employed in connection with other testing programs in addition to flight testing. By way of example and not by way of limitation, embodiments of the disclosure may be advantageously installed in a production configuration of a vehicle such as an aircraft, automobile, truck, ship, boat or another vehicular or non-vehicular system to effect such functions as health monitoring, predictive maintenance and other sensor monitoring jobs. Substantially similar issues apply to the production world of design, installation, and weight of wire and other components necessary for non-wireless instrumentation.

Further features of embodiments of the disclosure will be apparent from the following specification and claims when considered in connection with the accompanying drawings, in which like elements are labeled using like reference numerals in the various figures, illustrating preferred embodiments of the disclosure.

### BRIEF DESCRIPTION OF THE DRAWINGS

FIG. 1 is a schematic illustrating a representative installation of a system of an embodiment in an aircraft.
FIG. 2 is a schematic diagram illustrating a representative communicating node with associated sensor units.
FIG. 3 is as schematic diagram illustrating representative overlap among wireless communication ranges of a plurality of hosting communicating nodes and respective associated sensing units.
FIG. 4 is a flow chart illustrating a method according to an embodiment of the disclosure.

### DETAILED DESCRIPTION

One embodiment of the disclosure has a system configured as a wireless sensor network that can reduce wire routing and installation time required for flight test.

One challenge involved in designing the wireless sensor network the embodiment is providing local power to wireless sensor units that is safe and will operate in harsh environments. Time correlation of data over a wireless network embodiment of the disclosure is difficult when transmitting high speed data. Time stamping of data close to its origin or point of measure provided one satisfactory solution for providing desired accuracy in time correlation of collected data.

Bandwidth and scalability of data is another design consideration when operating in a relatively small area with significant volumes of data being sent and received simultaneously. Bandwidth and scalability design considerations may be handled in an embodiment the system by creating independent zones or piconets that are isolated from each other, and multiplexing data from the various independent zones that is time stamped close to the source of the data measurement or acquisition.

Other design considerations in designing a wireless sensing network or system may include, by way of example and not by way of limitation, managing power to limit propagation of wireless signals, designing antennas to optimize signal paths within a system, employing a network management tool for effecting system flexibility. By way of further example and not by way of limitation, one may employ software tools to optimize information flow within a system or to manage hardware employment, such as by selectively turning off one or more independent zones when not in use in order to manage power consumption.

In a preferred embodiment, independent zones may be advantageously configured as independent piconets, employing a plurality of Transducer Interface Modules (TIMs) in cooperation with a Network Capable Application Processor (NCAP). A TIM may be a module that performs interface functions such as, but not limited to, signal conditioning, Analog-to-Digital (A-to-D) conversion or Digital-to-Analog (D-to-A) conversion, or other interface functions to present a treated signal to the NCAP.

The system preferably employs a sensor connected to a Transducer Interface Module (TIM) by a short wire harness. The sensor may be integrally formed with the TIM. Some parameters measured by some sensors may require treatment by the TIM or other system component so as to be useful in a test program. A parameter measured by strain gage, by way of example and not by way of limitation, may require treatment such as analog signal conditioning and an A-to-D (Analog-to-Digital) conversion to produce a usable parametric signal. Such signal treatment may be carried out using circuitry provided on a daughter board in the TIM. In such manner, a TIM may be manufactured as a generally common system element, with changes to effect different signal treatment requirements being accommodated on custom daughter boards for use with TIMs installed at appropriate sampling loci in an aircraft. By way of example and not by way of limitation, the TIM data may be sampled, signal conditioned, digitized, converted to engineering units, buffered, or otherwise treated as required.

A group of sensors with respective TIMs may be coupled with a Network Capable Application Processor (NCAP) to form an independent zone configured as a sub-network or "piconet". NCAPs associated with piconets may operate as a master unit in a master-slave relationship vis-à-vis TIMs in a respective piconet and may communicate with a central processing or control unit on board the test-aircraft to carry out a test program. The number of possible zones is theoretically determined by the signal propagation of each component and their relationship to other zones, as well as, the management of which zone is active at a given time. By way of example and not by way of limitation, software may manage a network to place one or more selected TIMs in a sleep mode when the selected TIMs are not needed. Such selective employnent of TIMs can save power and can assist in managing signal propagation issues such as signal interference, signal strength and other propagation issues.

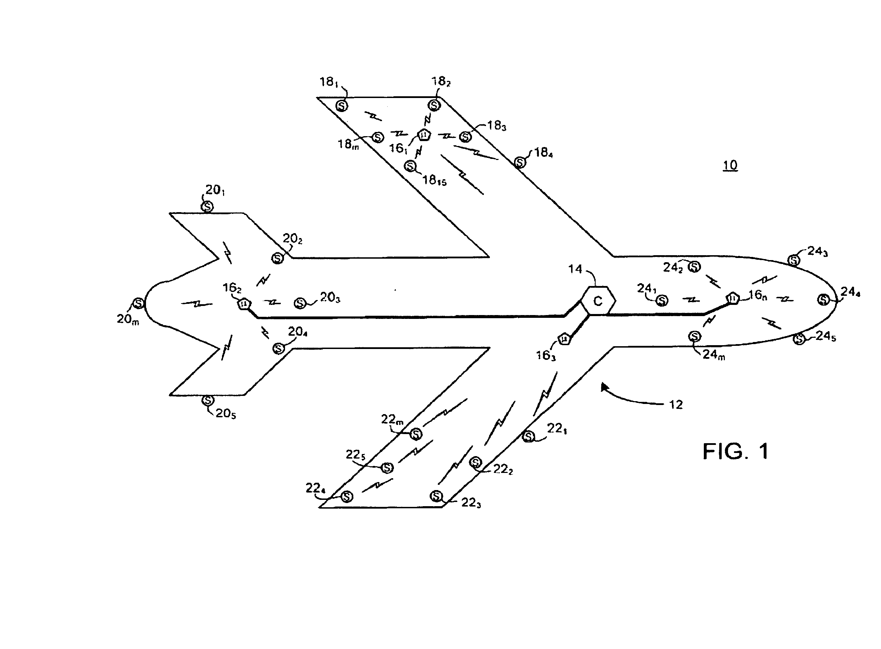

FIG. 1 is a schematic illustrating a representative installation of a system of an embodiment in an aircraft. In FIG. 1, an aircraft 10 is configured with a test system 12 for effecting flight testing of aircraft 10. Test system 12 includes a central unit 14 communicatingly coupled with a plurality of communicating nodes 16₁, 16₂, 16₃, 16ₙ. The indicator "n" is employed to signify that there can be any number of communicating nodes in test system 12. The inclusion of four communicating nodes 16₁, 16₂, 16₃, 16ₙ in FIG. 1 is illustrative only and does not constitute any limitation regarding the number of communicating nodes that may be included in the test system of an embodiment of the disclosure.

Selected communicating nodes such as, by way of example and not by way of limitation, communicating nodes 16₂, 16₃, 16ₙ may be wire coupled with central unit 14. Wire coupling may be effected, by way of example and not by way of limitation, using an Ethernet connection, fiber optic cable, or another cable or wire connection or digital data transport arrangement. Alternatively selected communicating nodes such as, by way of example and not by way of limitation, communicating node 16₁ may be wirelessly coupled with central unit 14. By way of example and not by way of limitation, such wireless coupling may be configured according to the IEEE (Institute of Electrical and Electronics Engineers) 802.11g WiFi Standard or another wireless connection arrangement.

Each respective communicating node 16₁, 16₂, 16₃, 16ₙ is coupled with at least one sensor unit. In representative test system 12 illustrated in FIG. 1, communicating node 16₁ is coupled with sensor units 18₁, 18₂, 18₃, 18₄, 18₅, 18ₘ. Communicating node 16₂ is coupled with sensor units 20₁, 20₂, 20₃, 20₄, 20₅, 20ₘ. Communicating node 16₃ is coupled with sensor units 22₁, 22₂, 22₃, 22₄, 22₅, 22ₘ. Communicating node 16ₙ is coupled with sensor units 24₁, 24₂, 24₃, 24₄, 24₅, 24ₘ. The indicator "m" is employed to signify that there can be any number of sensor units coupled with a respective communicating node in test system 12. The inclusion of six sensor units coupled with each communicating node in FIG. 1 is illustrative only and does not constitute any limitation regarding the number of sensor units that may be coupled with a selected communicating node in the test system of an embodiment of the disclosure. Moreover, illustrating the same number of sensor units coupled with each selected communicating node in FIG. 1 is illustrative only and does not constitute any limitation regarding the number of sensor units that may be coupled with a respective communicating node in the test system of an embodiment of the disclosure.

Some sensor units of sensor units 18ₘ, 20ₘ, 22ₘ, 24ₘ may be wire-coupled with a respective communicating node 16ₙ. Wire-coupling may be effected, by way of example and not by way of limitation, using an Ethernet connection or another cable or wire connection arrangement. In order to achieve maximum benefit of embodiments of the disclosure, it is preferred that sensor units 18ₘ, 20ₘ, 22ₘ, 24ₘ be wirelessly coupled with communicating nodes 16ₙ, using a Bluetooth connection or another wireless connection arrangement.

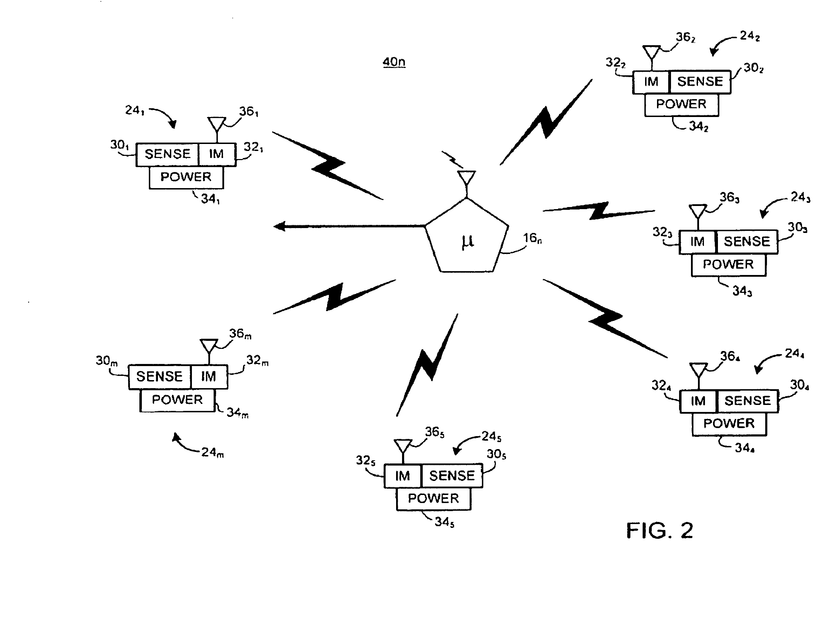

FIG. 2 is a schematic diagram illustrating a representative communicating node with associated sensor units. In FIG. 2, a communicating node 16ₙ is wirelessly coupled with sensor units 24₁, 24₂, 24₃, 24₄, 24₅, 24ₘ. Each sensor unit 24ₘ includes a sensing module 30ₘ, an interface module 32ₘ, a power module 34ₘ and an antenna 36ₘ. Sensor unit 24₁ includes a sensing module 30₁, an interface module 32₁, a power module 34₁ and an antenna 36₁. Sensor unit 24₂ includes a sensing module 30₂, an interface module 32₂, a power module 34₂ and an antenna 36₂. Sensor unit 24₃ includes a sensing module 30₃, an interface module 32₃, a power module 34₃ and an antenna 36₃. Sensor unit 24₄ includes a sensing module 30₄, an interface module 32₄, a power module 34₄ and an antenna 36₄. Sensor unit 24₃ includes a sensing module 30₅, an interface module 32₅, a power module 34₅ and an antenna 36₅. Sensor unit 24ₘ includes a sensing module 30ₘ, an interface module 32ₘ, a power module 34ₘ and an antenna 36ₘ.

Interface modules 32ₘ may each be configured as a Transducer Interface Module (TIM). Connection between a sensing module 30ₘ and a TIM 32ₘ may be established using a short wire harness or the sensing module 30ₘ may be integrally formed with a TIM 32ₘ. Some parameters measured by some sensing modules 30ₘ may require treatment by a connected TIM 32ₘ or other system component so as to be useful in a test program. A parameter measured by strain gage, by way of example and not by way of limitation, may require treatment such as analog signal conditioning and an A-to-D (Analog-to-Digital) conversion to produce a usable parametric signal. Such signal treatment may be carried out using circuitry provided on a daughter board in the TIM 32ₘ. In such manner, a TIM 32ₘ may be manufactured as a generally common system element, with changes to effect different signal treatment requirements being accommodated on custom daughter boards for use with TIMs 32ₘ installed at appropriate sampling loci in an aircraft. By way of example and not by way of limitation, a TIM 32ₘ may sample data, condition signals, digitize data, convert data to engineering units, buffer data, or otherwise treat data as required.

A group of sensor units 24ₘ including respective sensing modules 30ₘ, TIMs 32ₘ and power modules 34ₘ may be coupled (preferably wirelessly coupled) with a respective communicating node 16ₙ. Communicating node 16ₙ may be embodied in a Network Capable Application Processor (NCAP) to form an independent zone configured as a sub-network or "piconet" 40ₙ. Each NCAP 16ₙ associated with a respective piconet 40ₙ may operate as a master unit in a master-slave relationship vis-à-vis TIMs 32ₘ in a respective piconet 40ₙ. As illustrated in FIG. 1, an NCAP 16ₙ may communicate with a central processing or control unit 14 on board a test-aircraft 10 to carry out a test program. The number of possible zones or piconets 40ₙ is theoretically determined by the wireless signal propagation of each sensor unit 18ₘ, 20ₘ, 22ₘ, 24ₘ; each communicating node 16ₙ and their relationships to other piconets 40ₙ.

By way of example and not by way of limitation, a TIM 32ₘ may manage time using an internal clock as directed by a communicating node 16ₙ embodied in an NCAP (Network Capable Application Processor) using periodic commands. Such a design arrangement may synchronize each respective TIM 32ₘ to begin its respective data acquisition cycle. In such an arrangement, respective data acquisition, cycles are managed at the level of respective TIMs 32ₘ, and data transfer cycle is managed by an NCAP.

Some of sensor units 24ₘ may be situated within a pressurized space in a test aircraft (e.g., test aircraft 10; FIG. 1). Other sensor units 24ₘ may be situated outside of a pressurized space of test aircraft 10. As mentioned earlier herein, in order to achieve maximum benefit of embodiments of the disclosure, it is preferred that sensor units 18ₘ, 20ₘ, 22ₘ, 24ₘ be wirelessly coupled with NCAPs or communicating nodes 16ₙ, using a wireless connection arrangement. In a preferred embodiment of the disclosure, TIMs 32ₘ are coupled with NCAPs 16ₙ using an IEEE 802.15 Bluetooth communication protocol, and NCAPs 16ₙ are coupled with a parent data system or central unit 14 (FIG. 1) using an IEEE 802.11g WiFi communication protocol. In its preferred embodiment, an NCAP 16ₙ is equipped with at least two radio communication units to facilitate using the desired two separate communication protocols. It is preferred that participating radio units be qualified for participation in a test system 12 (FIG. 1) or in a piconet 40ₙ. By way of example and not by way of limitation, software or other tools may be employed to preclude participation by non-qualified radios from joining a test system 12 or a piconet 40ₙ.

It is especially important that at least sensor units 24ₘ situated outside of a pressurized space in test aircraft 10 be wirelessly coupled with a respective NCAP or communicating node 16ₙ inside of a pressurized space in test aircraft 10 to facilitate coupling while avoiding expense and inconvenience associated with traversing a pressurized boundary to establish a wire connection with an NCAP or communicating node 16ₙ.

When requested by a respective UNCAP or communicating node 16ₙ. sensor units 24ₘ (via respective TIM 32ₘ) may organize data relating to a measured parameter or parameters into packets or data grams. The data grams may be time-stamped and sent to a central unit 14 (FIG. 1). Communication among various TIMs 32ₘ, NCAPs 16ₘ and central unit 14 may be carried out using wireless communication or wired communication. Wireless communications may use, by way of example and not by way of limitation, a Bluetooth wireless link according to an IEEE 802.15 series standard, a wireless link according to an IEEE 802.1 series standard or another wireless link. Connected communications may use, by way of example and not by way of limitation, a wired Ethernet link according to an IEEE 802.3 standard, a fiber optic (non-wired) link or another connected communication link. It is preferred to avoid wired links outside or partially outside an aircraft because of dangers associated with possible lightning strikes. It is preferred that communications across long distances or through boundaries of pressure zones be carried out using wireless communications in order that economic benefits of such an installation can be used to advantage. A wireless sensor network of the sort disclosed herein may add value vis-à-vis a wired-network system by reducing duration of schedule interruptions and by reducing installation, removal, and maintenance costs associated with a test program, such as costs and structural changes required by pre-testing installation and post-testing removal of wires or cables. A lower total cost of a measurement and test program may result.

An architecture that supports a modular block format may also be preferred so that as technology in one block may change, only the affected block needs to be replaced. Using such a modular architecture, by way of example and not by way of limitation, a radio module may be changed to accommodate new technology without affecting other modules in the system.

In providing local power without the option of wired transmission of power from a centralized source, the choice comes down to designing power modules 34ₘ to produce power locally or to store power locally and draw from the stored energy. Energy harvesting is one design approach that may have an advantage of little power storage, limited regular maintenance, and substantially unlimited use. Environmental restrictions may be built into a low cost energy harvesting design. Energy harvesting generally may involve: (1) Identifying an energy source. Some typical sources for energy harvesting may include, by way of example and not by way of limitation, vibration, temperature gradient, light source, or fluid flow. (2) Determining reliability of the source. That is, to inquire whether the energy source is available when needed. (3) Providing an efficient device to harvest the energy and deliver the energy to the load.

Other systems and methods for providing and storing power locally near a parameter measurement site or locus may also be employed. Local power systems such as battery systems, by way of example and not by way of limitation, enable avoiding having to install wires from a central power source to a TRIM 32ₘ and associated sensing module 30ₘ. Having to install a power wire would negate gains made by establishing wireless communications between a TIM 32ₘ and an NCAP 16ₙ.

One consideration in designing a wireless sensor system is providing a deterministic transport of data from a data source to a point at which the transported data can be time stamped or otherwise rendered deterministic. Determinism is closely related to the correlation of data over the entire test scope and duration because any measurement uncertainty introduced in terms of indeterminism or latency may affect correlation of events in different parts of the test. Indeterminate correlation of events in a test may reduce ability to analyze cause-and-effect relationships sought to be evaluated by a test.

The system of an embodiment of the disclosure may address determinism by tagging data with a time stamp in a respective NCAP 16ₙ. Such time stamping may serve to nullify or reduce variations in the transmission time over a wireless network to a central unit 14 or elsewhere for recording because the data event time is already identified in the time stamp. Accurate time information from the data source to the location in the network where the data is time stamped is important for a useful time stamping approach. Such time information should be accurate enough to provide a desired level of determinism. An approach used in an embodiment of the system of the disclosure for providing such accuracy in time information may be carried out in a software implementation of IEEE 1588 Precision Time Protocol (PTP) standard and the Bluetooth standard. An example of such a software implementation is described in "Design Considerations for Software only Implementations of the IEEE 1588 Precision Time Protocol" by Kendall Correll, Nick Barendt and Michael Branicky; IEEE 1588 Conference; 2005.

The PTP provides a method for networked computer systems to agree on a master clock reference time and a way for slave clocks to estimate their offset from the master clock time through analysis of a series of time stamped packets. A clock discipline may be set up between the master and slaves using a series of clock estimates. This method, when done in the physical layer, provides sub-microsecond accuracy. By way of example and not by way of limitation, a method of accomplishing this in software, known as the Precision Time Protocol daemon (PTPd), has been developed (see Correll et al. cited above). When effective wireless communicating ranges of neighboring piconets overlap there is a need for avoiding interference among communications in overlapping piconet coverage areas.

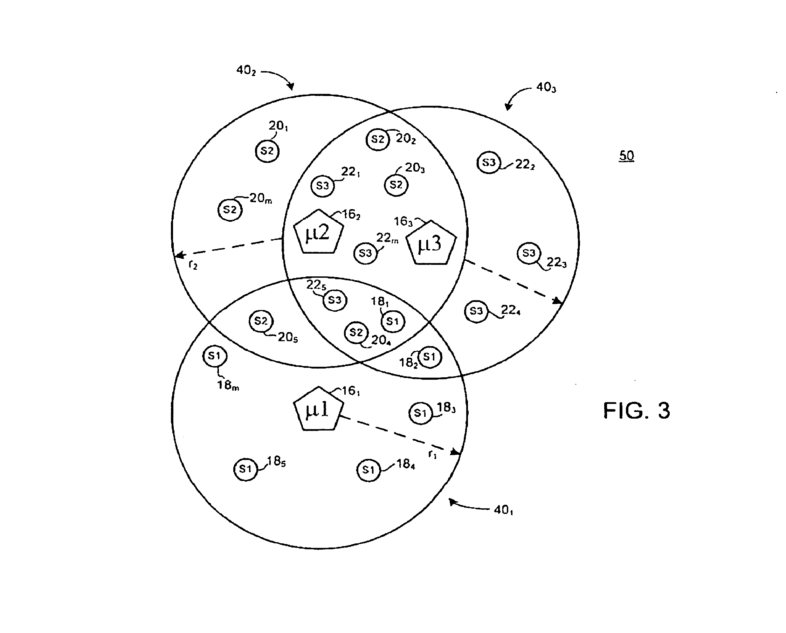

FIG. 3 is as schematic diagram illustrating representative overlap among wireless communication ranges of a plurality of hosting communicating nodes and respective associated sensing units. In FIG. 3, a communicating network 50 includes piconets 40₁, 40₂, 40₃. Piconet 40₁ includes a communicating node 16₁ hosting a plurality of sensor units 18₁, 18₂, 18₃, 18₄, 18₅, 18ₘ. Communicating node 16₁ has an effective wireless communicating range r₁. Piconet 40₂ includes a communicating node 16₂ hosting a plurality of sensor units 20₁, 20₂, 20₃, 20₄, 20₅, 20ₘ. Communicating node 16₂ has an effective wireless communicating range r₂. Piconet 40₃ includes a communicating node 16₃ hosting a plurality of sensor units 22₁, 22₂, 22₃, 22₄, 22₅, 22ₘ. Communicating node 16₃ has an effective wireless communicating range r₃. Sensor units 18ₘ, 20ₘ, 22ₘ may be configured substantially as described in connection with FIG. 2.

Communicating units 16₁, 16₂, 16₃ are situated in appropriate proximity that communicating ranges r₁, r₂, r₃ overlap. A result is that a sensor unit associated with a respective hosting communicating node 16₁, 16₂, 16₃ may be situated within effecting communicating range of another communicating node than the hosting communicating node for the respective sensor unit.

In the representative orientation illustrated in FIG. 3, sensor unit 18₁ is within effective wireless communication range of its host communicating node 16₁, and also is within effective wireless communicating range of communicating nodes 16₂, 16₃. Sensor unit 18₂ is within effective wireless communication range of its host communicating node 16₁, and also is within effective wireless communicating range of communicating node 16₃. Sensor units 18₃, 18₄, 18₅, 18ₘ are within effective wireless communicating range of only their respective host communicating node 16₁.

Sensor unit 20₄ is within effective wireless communication range of its host communicating node 16₂, and also is within effective wireless communicating range of communicating nodes 16₁, 16₃. Sensor unit 20₅ is within effective wireless communication range of its host communicating node 16₂, and also is within effective wireless communicating range of communicating node 16₁. Sensor units 20₂, 20₃ are within effective wireless communication range of their host communicating node 16₂, and also are within effective wireless communicating range of communicating node 16₃. Sensor units 20ₗ, 20ₘ are within effective wireless communicating range of only their respective host communicating node 16₁.

Sensor unit 22₅ is within effective wireless communication range of its host communicating node 16₃, and also is within effective wireless communicating range of communicating nodes 16₁, 16₂. Sensor units 22ₗ, 22ₘ are within effective wireless communication range of their host communicating node 16₃, and also are within effective wireless communicating range of communicating node 16₂. Sensor units 22_{2,} 22₃, 22₄ are within effective wireless communication range of only their respective host communicating node 16₃.

The indicator "m" is employed to signify that there can be any number of sensor units coupled with a respective communicating node in test system 12. The inclusion of six sensor units coupled with each communicating node 16₁, 16₂, 16₃ in FIG. 3 is illustrative only and does not constitute any limitation regarding the number of sensor units that maybe coupled with a selected communicating node in the test system of an embodiment of the disclosure. Moreover, illustrating the same number of sensor units coupled with each selected communicating node 16₁, 16₂, 16₃ in FIG. 3 is illustrative only and does not constitute any limitation regarding the number of sensor units that may be coupled with a respective communicating node in the test system of an embodiment of the disclosure.

Each piconet 40_{1,} 40₂, 40₃ should preferably be configured to prevent interference with other piconets 40₁, 40₂, 40₃ such as, by way of example and not by way of limitation, by increasing the distance between communicating nodes 16₁, 16₂, 16₃, by tuning antennas in a piconet (see, e.g., antennas 36ₘ; FIG. 2), or by reducing the power of the radio transmitter unit in the TIMs 32ₘ (FIG. 2) in a piconet 40₁, 40₂, 40₃. Other techniques may also be employed to reduce or avoid interference among piconets 40₁, 40₂, 40₃ such as, by way of example and not by way of limitation, frequency division multiplexing, time division multiplexing, code division multiplexing or other interference reducing techniques which may be adapted from other radio-based technologies.

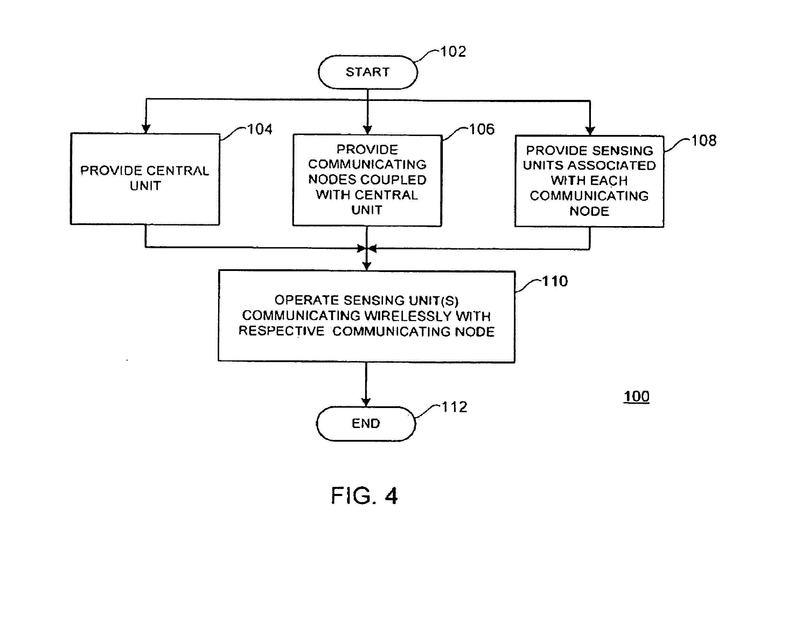

FIG. 4 is a flow chart illustrating a method according to an embodiment of the disclosure. In FIG. 4, a method 100 for measuring parameters at a plurality of loci associated with an aircraft begins at a START locus 102. Method 100 continues by, in no particular order: (1) providing a central unit, as indicated by a block 104; (2) providing a plurality of communicating nodes coupled with the central unit, as indicated by a block 106; and (3) providing a respective plurality of sensing units associated with each respective communicating node of the plurality of communicating nodes, as indicated by a block 108.

Method 100 continues by operating at least one selected sensing unit of at least one respective plurality of sensing units as a remote sensing unit, as indicated by a block 110. The at least one remote sensing unit communicates wirelessly with the respective communicating node. Method 100 terminates at an END locus 112.

It is to be understood that, while the detailed drawings and specific examples given describe preferred embodiments of the disclosure, they are for the purpose of illustration only, that the apparatus and method of embodiments of the disclosure are not limited to the precise details and conditions disclosed and that various changes may be made therein without departing from the embodiments of the disclosure which is defined by the following claims:

## Claims

1. A system (12) for measuring parameters at a plurality of loci associated with an aircraft; the system comprising:
(a) a central unit (14);
(b) a plurality of communicating nodes (16ₙ) coupled with said central unit; and **characterized by**
(c) a respective plurality of sensing units (18ₘ, 20ₘ, 22ₘ, 24ₘ) associated with each respective communicating node (16ₙ) of said plurality of communicating nodes; at least one selected sensing unit (18ₘ, 20ₘ, 22ₘ, 24ₘ) of at least one said respective plurality of sensing units being a remote sensing unit; said at least one remote sensing unit (18ₘ, 20ₘ, 22ₘ, 24ₘ) communicating wirelessly with said respective communicating node (16ₙ).

2. The system of Claim 1, wherein said at least one remote sensing unit (18ₘ, 20ₘ, 22ₘ, 24ₘ) is comprised of a sensing element (30ₘ) coupled with an interface element; said sensing element indicating a measured parameter to said interface element (32ₘ); said interface element communicating information related with said measured parameter in said wireless communicating.

3. The system of Claim 1 or 2, wherein said aircraft includes a pressurized space and wherein said at least one remote sensing unit (18ₘ, 20ₘ, 22ₘ, 24ₘ) is an outside sensing unit (18₄, 20₁, 20₅, 20ₘ, 22₁, 24₃, 24₅); said outside sensing unit being situated at a respective unpressurized locus of said plurality of loci outside of said pressurized space.

4. The system of Claim 3, wherein said outside sensing unit (18₄, 20₁, 20₅, 20ₘ, 22₁, 24₃, 24₅) is powered by a dedicated power source (34ₘ).

5. The system of Claim 2 or 4, wherein said information includes said measured parameter.

6. The system of Claim 2, wherein said information includes a treatment of said measured parameter.

## Patentansprüche

1. System (12) zum Messen von Parametern an einer Vielzahl von einem Flugzeug zugeordneten Orten; mit:
(a) einer Zentraleinheit (14);
(b) einer Mehrzahl von mit der Zentraleinheit gekoppelten Kommunikationspunkten (16ₙ); und **gekennzeichnet durch**
(c) eine jeweilige Mehrzahl von Sensoreinheiten (18ₘ, 20ₘ, 22ₘ, 24ₘ), die jedem jeweiligen Kommunikationspunkt (16ₙ) der Mehrzahl von Kommunikationspunkten zugeordnet sind; wobei mindestens eine ausgewählte Sensoreinheit (18ₘ, 20ₘ, 22ₘ, 24ₘ) von mindestens einer der jeweiligen Mehrzahl von Sensoreinheiten eine Fern-Sensoreinheit ist; wobei die mindestens eine Fern-Sensoreinheit (18ₘ, 20ₘ, 22ₘ, 24ₘ) drahtlos mit dem jeweiligen Kommunikationspunkt (16ₙ) kommuniziert.

2. System nach Anspruch 1, wobei die mindestens eine Fern-Sensoreinheit (18ₘ, 20ₘ, 22ₘ, 24ₘ) ein Sensorelement (30ₘ) aufweist, das mit einem Schnittstellenelement gekoppelt ist; wobei das Sensorelement dem Schnittstellenelement (32) einen gemessenen Parameter anzeigt; wobei das Schnittstellenelement die auf den gemessenen Parameter bezogene Information mittels der drahtlosen Kommunikation kommuniziert.

3. System nach Anspruch 1 oder 2, wobei das Flugzeug einen Druckraum aufweist und wobei die mindestens eine Fern-Sensoreinheit (18ₘ, 20ₘ, 22ₘ, 24ₘ) eine Außen-Sensoreinheit (18₄, 20₁, 20₅, 20ₘ, 22₁, 24₃, 24₅) ist; wobei die Außen-Sensoreinheit an einem entsprechend nicht unter Druck stehenden Ort der Mehrzahl von Orten außerhalb des Druckraums gelegen ist.

4. System nach Anspruch 3, wobei die Außen-Sensoreinheit (18₄, 20₁, 20₅, 20ₘ, 22₁, 24₃, 24₅) durch eine zugewiesene Leistungsquelle (34ₘ) angetrieben ist.

5. System nach Anspruch 2 oder 4, wobei die Information den gemessenen Parameter aufweist.

6. System nach Anspruch 2, wobei die Information eine Behandlung des gemessenen Parameters aufweist.

## Revendications

1. Système (12) pour mesurer des paramètres sur une pluralité de sites associés à un aéronef ; le système comprenant :
(a) une unité centrale (14) ;
(b) une pluralité de noeuds de communication (16ₙ) couplée à ladite unité centrale ; et **caractérisé par**
(c) une pluralité respective d'unités de détection (18ₘ, 20ₘ, 22ₘ, 24ₘ) associée à chaque noeud de communication respectif (16ₙ) de ladite pluralité de noeuds de communication; au moins une unité de détection sélectionnée (18ₘ, 20ₘ, 22ₘ, 24ₘ) d'au moins une dite pluralité respective d'unités de détection étant une unité de détection à distance ; ladite au moins une unité de détection à distance (18ₘ, 20ₘ, 22ₘ, 24ₘ) étant en communication sans fil avec ledit noeud de communication respectif (16ₙ).

2. Système selon la revendication 1, dans lequel ladite au moins une unité de détection à distance (18ₘ, 20ₘ, 22ₘ, 24ₘ) est constituée d'un élément de détection (30ₘ) couplé à un élément d'interface ; ledit élément de détection indiquant un paramètre mesuré audit élément d'interface (32ₘ) ; ledit élément d'interface communiquant des informations relatives audit paramètre mesuré dans ladite communication sans fil.

3. Système selon la revendication 1 ou 2, dans lequel ledit aéronef comporte un espace pressurisé et dans lequel ladite au moins une unité de détection à distance (18ₘ, 20ₘ, 22ₘ, 24ₘ) est une unité de détection extérieure (18₄, 20₁, 20₅, 20ₘ, 22₁, 24₃, 24₅); ladite unité de détection extérieure occupant un site non pressurisé respectif de ladite pluralité de sites à l'extérieur dudit espace pressurisé.

4. Système selon la revendication 3, dans lequel ladite unité de détection extérieure (18₄, 20₁, 20₅, 20ₘ, 22₁, 24₃, 24₅) est alimentée par une source d'énergie dédiée (34ₘ).

5. Système selon la revendication 2 ou 4, dans lequel lesdites informations comportent ledit paramètre mesuré.

6. Système selon la revendication 2, dans lequel lesdites informations comportent un traitement dudit paramètre mesuré.
